(19) Europäisches Patentamt
European Patent Office
Office européen des brevets

(11) **EP 1 994 499 B1**

(12) **EUROPÄISCHE PATENTSCHRIFT**

(45) Veröffentlichungstag und Bekanntmachung des Hinweises auf die Patenterteilung:
**05.08.2009 Patentblatt 2009/32**

(21) Anmeldenummer: **07711879.2**

(22) Anmeldetag: **05.03.2007**

(51) Int Cl.:
***G06T 1/00*** *(2006.01)*

(86) Internationale Anmeldenummer:
**PCT/EP2007/002073**

(87) Internationale Veröffentlichungsnummer:
**WO 2007/101699 (13.09.2007 Gazette 2007/37)**

(54) **HERSTELLUNG EINER LINIENARTIGEN ODER FLÄCHENARTIGEN FORM**

CREATION OF A LINEAR OR PLANAR SHAPE

FABRICATION D'UNE FORME LINÉAIRE OU SURFACIQUE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **06.03.2006 DE 102006010610**

(43) Veröffentlichungstag der Anmeldung:
**26.11.2008 Patentblatt 2008/48**

(73) Patentinhaber: **Fraunhofer-Gesellschaft zur Förderung der angewandten Forschung e.V. 80686 München (DE)**

(72) Erfinder: **FUNK, Wolfgang 63741 Aschaffenburg (DE)**

(74) Vertreter: **Bressel, Burkhard Patentanwälte Bressel und Partner Radickestrasse 48 12489 Berlin (DE)**

(56) Entgegenhaltungen:
**US-A1- 2003 128 209**

- **OHBUCHI, R. AND MASUDA, H.: "Managing CAD Data as a Multimedia Data Type Using Digital Watermarking" IFIP WG 5.2 FOURTH WORKSHOP ON KNOWLEDGE INTENSIVE CAD, [Online] 22. Mai 2000 (2000-05-22), - 24. Mai 2000 (2000-05-24) Seiten 1-13, XP002451614 Parma, Italy Gefunden im Internet: URL:http://www.kki.yamanashi.ac.jp/~ohbuch i/online_ pubs/kic_4_2000/kic4paper.pdf> [gefunden am 2007-09-19] in der Anmeldung erwähnt**
- **OHBUCHI R ET AL: "A shape-preserving data embedding algorithm for NURBS curves and surfaces" TRANSACTIONS OF THE INFORMATION PROCESSING SOCIETY OF JAPAN INF. PROCESS. SOC. JAPAN JAPAN, Bd. 41, Nr. 3, März 2000 (2000-03), Seiten 559-569, XP002451615 ISSN: 0387-5806**
- **JAE JUN LEE ET AL: "Watermarking for 3D NURBS graphic data" PROCEEDINGS OF 2002 IEEE WORKSHOP ON MULTIMEDIA SIGNAL PROCESSING (CAT. NO.02TH8661) IEEE PISCATAWAY, NJ, USA, 2002, Seiten 304-307, XP002451616 ISBN: 0-7803-7713-3**

EP 1 994 499 B1

**Beschreibung**

Die Erfindung betrifft ein Verfahren und eine Anordnung zum Herstellen von Industriegütern oder anderen Gegenständen, insbesondere von Kraftfahrzeug-Karosserien. Bei der Konstruktion einer linienartigen oder flächenartigen Form des Gegenstandes wird in ein Modell der linienartigen oder flächenartigen Form ein Wasserzeichen eingeprägt. Bei dem Modell handelt es sich insbesondere um ein NURBS (Non-Uniform Rational B-Splines) Modell. Der Begriff "Modell einer linienartigen oder flächenartigen Form" schließt topologisch-geometrische Flächen-oder Volumenmodelle (so genannte "Boundary Representation" oder "B-Rep") mit ein, die eine Fläche bzw. ein Volumen über die begrenzenden Linien bzw. Flächen definieren.

Digitale Modelle werden seit einigen Jahren zur Konstruktion von Industriegütern und anderen Gegenständen eingesetzt. Häufig beschreiben solche Modelle Konturen oder Oberflächen von Gegenständen, wie z. B. Kraftfahrzeug-Karosserien, die in verschiedenen Planungs- und Konstruktionsstufen von verschiedenen Anwendern entwickelt und genutzt werden sollen. In Industriezweigen wie der Automobilindustrie wird die Verfolgung der Verteilungswege digitaler Modelle zunehmend als sicherheitsrelevante Notwendigkeit erkannt. Insbesondere soll nachvollziehbar sein, an welcher Stelle der Prozesskette wertvolle Design-Information aus dem definierten Arbeitsablauf der Konstruktion heraus an unberechtigte Dritte weitergegeben wurde.

Mit Hilfe eines personalisierten (das heißt einer Person oder alternativ einem Prozessschritt der Prozesskette zugeordneten) digitalen Wasserzeichens in Kopien des Originalmodells können diese zu einem späteren Zeitpunkt eindeutig einem Auslieferungspunkt (z. B. einem Zulieferer, Unterauftragnehmer, etc.) zugeordnet werden.

Die ursprünglichen Modelle werden meist mit Computer Aided Design (CAD) Systemen erstellt und liegen typischerweise in Form dreidimensionaler Datensätze vor, die in vielen Fällen als Kurven und Flächen in Form NURBS repräsentiert werden. Die NURBS-Modelle werden komplett oder als Teilmodelle an Zulieferer, Lieferanten, Werbeagenturen und andere Partner weitergegeben. Gerade in der Automobilindustrie birgt die vorzeitige Veröffentlichung neuer Designs ein hohes Verlustpotential, da der Absatz aktueller Produktlinien negativ beeinflusst wird.

Eine NURBS-Kurve $C(u)$ ist definiert durch ihren Grad p, eine Menge gewichteter Kontrollpunkte $P_i$ und einen Knotenvektor U. NURBS-Kurven und -Flächen sind Verallgemeinerungen von sowohl B-Splines als auch Bézierkurven und -flächen. Der hauptsächliche Unterschied zu diesen beiden Splinearten ist die Gewichtung der Kontrollpunkte mit den Gewichten $w_i$. Durch die Gewichte $w_i$ werden NURBS-Kurven rational (nicht-rationale B-Splines sind ein Spezialfall rationaler B-Splines).

Eine NURBS-Kurve ist über die Summe der mit rationalen B-Spline-Basisfunktionen $R_{i,p}$ gewichteten Kontrollpunkte

$$C(u) = \sum_{i=0}^{n} R_{i,p}(u)P_i$$

vollständig definiert. Die rationale B-Spline-Basisfunktion $R_{i,p}$ errechnet sich aus B-Spline-Basisfunktionen $N_{i,p}$ der Ordnung des NURBS p und den zu den Kontrollpunkten zugehörigen Gewichten $w_i$ zu

$$R_{i,p}(u) = \frac{N_{i,p}(u)w_i}{\sum_{j=0}^{n} N_{j,p}(u)w_j} .$$

Der Parameter $u \in [a,b]$ schaltet im Bereich des Knotenvektors

$$U = \left\{ \underbrace{a,...,a}_{p+1}, u_{p+1},..., u_{r-p-1}, \underbrace{b,...,b}_{p+1} \right\}$$

der Länge r+1 die einzelnen Segmente der Spline-Kurve aktiv. Die Elemente des Knotenvektors sind monoton steigend. Die Knoten mit den Indizes p+1 bis r-p-1 werden auch als innere Knoten bezeichnet.

Der Knotenvektor besteht aus Parameterwerten, die den Einfluss der Kontrollpunkte auf die NURBS-Kurve festlegen. Die Anzahl der Knoten ist immer gleich der Anzahl der Kontrollpunkte plus den Grad der Kurve plus eins. Beispielsweise hat eine Kurve dritten Grades mit fünf Kontrollpunkten neun Knoten (5 + 3 + 1 = 9), wovon einer ein innerer Knoten ist.

Die Werte des Knotenvektors müssen in aufsteigender Reihenfolge vorliegen. Damit ist U={0,0,1,2,3,3} gültig, {0,0,2,1,3,3} dagegen nicht. Die einzelnen Knotenwerte haben keine Aussage für sich selbst; einzig und allein die Verhältnisse der Differenzen zwischen den Knotenwerten haben eine Bedeutung. Demzufolge ergeben die Knotenvektoren {0,0,1,2,3,3}, {0,0,2,4,6,6}, und {1,1,2,3,4,4} alle die gleiche Kurve. Weiterhin darf die Vielfachheit eines inneren Knotens höchstens so groß sein wie der Grad der Kurve (kein innerer Knoten darf öfter als der Grad der Kurve auftauchen). Für NURBS ersten Grades ist jeder innere Knoten gepaart mit genau einem Kontrollpunkt.

Die Ordnung einer NURBS-Kurve ist festgelegt durch die Anzahl benachbarter Kontrollpunkte, die die Kurve beeinflussen. Die Kurve setzt sich mathematisch aus Polynomen zusammen, deren Grad eins kleiner als die Ordnung der Kurve ist. Also werden Kurven zweiten Grades (die durch lineare Polynome dargestellt werden) lineare Kurven, Kurven dritten Grades quadratische Kurven und Kurven vierten Grades kubische Kurven genannt. Die Anzahl der Kontrollpunkte muss größer oder gleich der Ordnung der Kurve sein.

In der Literatur (z. B. Ryutarou Ohbuchi, Hiroshi Masuda: "Managing CAD Data as a Multimedia Data Type Using Digital Watermarking", erschienen in: Umberto Cugini, Michael J. Wozny (Herausgeber): From Knowledge Intensive CAD to Knowledge Intensive Engineering, IFIP TC5 WG5.2 Fourth Workshop on Knowledge Intensive CAD, 22. bis 24. Mai 2000, Parma, Italien. IFIP Conference Proceedings 207 Kluwer 2001, ISBN 0-7923-7619-6) sind Verfahren zum Einbringen von Informationen bzw. Daten in ein Modell vorgeschlagen worden, die jedoch zu keiner Veränderung der Form führen, die durch das Modell definiert ist. Auch solche Informationen werden in der Literatur als Wasserzeichen bezeichnet. In dieser Beschreibung wird dagegen unter Einprägen des Wasserzeichens verstanden, dass die Form zumindest leicht verändert wird und das Wasserzeichen damit prinzipiell an der Form erkennbar ist. Das ursprüngliche Datenmaterial wird in jedem Fall verändert, so dass durch die Änderungen eine Information in den Originaldaten kodiert wird. Da das Modell in der Regel durch digitale Daten repräsentiert wird, kann auch von digitalen Wasserzeichen gesprochen werden. Ein Wasserzeichen kann insbesondere eine Formveränderung sein, die wie beim klassischen Wasserzeichen eines Papiers für sich genommen charakteristisch ist. Es kann in gleicher oder ähnlicher Weise in verschiedene Modelle eingeprägt werden, z. B. als Bitfolge.

Die genannte Veröffentlichung von Ohbuchi beschreibt auch das Einprägen von Wasserzeichen durch Veränderung der Form. Dabei werden als mögliche Maßnahmen das Modulieren von Kontrollpunkten und/oder von Gewichten sowie das Verändern der Werte eines Knotenvektors genannt. Diese Maßnahmen beziehen sich auf NURBS-Modelle.

Spätestens bei der Verwendung des Modells in der Produktion von Gegenständen sollen jedoch keine Formveränderungen mehr vorhanden sein. Es ist daher wünschenswert, die vorgenommenen Formveränderungen auf möglichst einfache Weise rückgängig machen zu können. Ein solches Wasserzeichen wird als reversibel bezeichnet. Andererseits steht dem die Forderung gegenüber, dass die Möglichkeit der Entfernung des Wasserzeichens auf berechtigte Personen beschränkt sein soll. Eine weitere Forderung an ein Verfahren zum Einprägen von Wasserzeichen ist, dass die Nutzbarkeit des Modells für den vorgesehenen Zweck auch vor der Entfernung des Wasserzeichens nicht eingeschränkt sein darf.

Es ist eine Aufgabe der vorliegenden Erfindung, ein Verfahren und eine Anordnung anzugeben, die in der Lage sind, bei der Konstruktion einer linienartigen oder flächenartigen Form eines Gegenstandes in ein Modell der linienartigen oder flächenartigen Form ein Wasserzeichen einzuprägen, sodass ein vollständiges Entfernen des Wasserzeichens möglich ist und die Form daher ohne eine Veränderung, die durch das Wasserzeichen hervorgerufen wird, hergestellt werden kann.

Die Erfindung bezieht sich insbesondere auf ein Modell mit einer Mehrzahl von Splines, die in ihrer Gesamtheit die Form bilden, wobei den Splines Kontrollpunkte zugeordnet sind, sodass durch Veränderung der Lage der Kontrollpunkte ein Verlauf des jeweils zugeordneten Splines verändert und damit kontrolliert werden kann. Optional kann für jeden oder einen Teil der Kontrollpunkte ein Gewicht definiert sein, mit dem es auf den Kurvenverlauf einwirkt. Dann ist es alternativ oder zusätzlich möglich, durch Veränderung des jeweiligen Gewichts des Kontrollpunkts, den Verlauf zu kontrollieren. Den Splines sind außerdem Knoten zugeordnet, die auf einem durch den jeweils zugeordneten Spline gebildeten Teil der Form liegen. Die Stetigkeit kann beispielsweise lediglich darin bestehen, dass an den Übergängen keine Stufen gebildet sind. Höhere Ordnungen der Stetigkeit sind jedoch die tangentiale Stetigkeit, die auch abknickende Verläufe an den Übergängen ausschließt und die Krümmungsstetigkeit, die keine sprungartige Änderung der Krümmung an dem jeweiligen Übergang zulässt.

Ein durch NURBS und/oder B-Splines definiertes Modell ist ein Modell wie im vorangegangenen Absatz beschrieben. Insbesondere können die Knoten von zumindest einem Parameter abhängen, der Eigenschaften des Modells steuert, z. B. eine Stetigkeit eines Verlaufs der Form beim Übergang eines Splines auf einen benachbarten Spline steuert.

Es wird vorgeschlagen beim Einprägen eines Wasserzeichens in das Modell die Form durch eine oder mehrere der folgenden Maßnahmen zu verändern:

a) die Lage von zumindest einem Kontrollpunkt wird verändert,

b) ein Gewicht, mit dem ein Kontrollpunkt auf die Form einwirkt und durch die Einwirkung auf die Form zumindest einen Bereich der Form beeinflusst, wird für zumindest einen Kontrollpunkt verändert und/oder

c) zumindest ein zusätzlicher Kontrollpunkt wird in das Modell eingefügt.

Maßnahme b) kann bei bestimmten Typen von Spline-Modellen nicht angewendet werden, da deren Kontrollpunkte keine Gewichte aufweisen, sondern z. B. unmittelbar auf der Kurve oder Fläche liegen, die durch die Splines definiert sind.

Ferner wird vorgeschlagen, dass eine Information darüber, wie die Veränderung der Form rückgängig gemacht werden kann, (eine solche Information wird im Folgenden als Veränderungsinformation bezeichnet) durch Einfügen zumindest eines zusätzlichen Knotens in das Modell eingebracht wird.

Da die Veränderungsinformation in dem Modell selbst enthalten ist, wird das rückgängig Machen der Veränderung erleichtert. Andererseits ist zum rückgängig Machen zumindest die Kenntnis darüber erforderlich, auf welche Weise die Veränderungsinformation durch Einfügen des zumindest einen zusätzlichen Knotens in das Modell eingebracht wurde. Hierfür gibt es verschiedene Möglichkeiten, auf die noch näher eingegangen wird.

Die Veränderungsinformation kann auch als Information über zumindest einen Teil der vorgenommenen Veränderungen bezeichnet werden. Wenn eine Veränderung reversibel ist, ist dies äquivalent zu einer Information darüber, wie die Veränderung rückgängig gemacht werden kann.

Es ist nicht zwingend erforderlich, dass die Veränderungsinformation die vollständige Information darüber enthält, wie die Veränderung rückgängig gemacht werden kann. Bevorzugt wird vielmehr, dass die Veränderung mit der in das Modell eingebrachten Veränderungsinformation allein nicht rückgängig gemacht werden kann. Beispielsweise kann zusätzlich noch ein Schlüssel (z. B. ein digitaler Code) erforderlich sein.

Bei einer besonderen Ausgestaltung des Verfahren wird daher eine logische Zuordnung eines Kontrollpunkts, der oder dessen Gewicht bei der Ausführung einer oder mehrerer der Maßnahmen a) bis c) verwendet wird, zu dem zusätzlich eingefügten Knoten, mit dem die der Veränderung durch den Kontrollpunkt entsprechende Veränderungsinformation in das Modell eingebracht wird, unter Verwendung eines Schlüssels hergestellt.

Der Schlüssel kann dann einem autorisierten Benutzer und/oder einer automatisch arbeitende Vorrichtung zum Entfernen (Extrahieren) des Wasserzeichens zur Verfügung gestellt werden.

Die Extraktionseinrichtung kann, unabhängig davon, ob ein solcher Schlüssel verwendet wird oder nicht, z. B. Teil einer Anordnung sein, die eine Steuereinrichtung zur Steuerung der Produktion eines Gegenstandes (z. B. in einer industriellen Produktionsanlage) aufweist. Die Steuereinrichtung ist ausgestaltet, das Modell auszuwerten und Steuerbefehle zu erzeugen, die eine Produktionseinrichtung veranlassen, einen entsprechend dem Modell geformten Gegenstand herzustellen. Die Extraktionseinrichtung ist Teil der Steuereinrichtung oder ist mit dieser kombiniert und ist ausgestaltet, die Veränderungsinformation automatisch anhand des oder der zusätzlichen Knoten auszuwerten wird und die Veränderung der Form rückgängig zu machen.

Gemäß einer besonders bevorzugten Ausgestaltung ist ein binärer Code mit zumindest einem Bit vorgegeben, wobei der binäre Code durch das Einprägen des Wasserzeichens in das Modell codiert werden soll. Das Bit kann einen ersten Wert und einen zweiten Wert annehmen. Das Bit wird durch eine lokale Verlagerung der Form quer zum Verlauf der Form, indem eine oder mehrere der Maßnahmen a) bis c) in Anspruch 1 ausgeführt werden, codiert, sodass die lokale Verlagerung in einer ersten Richtung den ersten Wert codiert und die lokale Verlagerung in einer zweiten, der ersten Richtung entgegengesetzten Richtung den zweiten Wert codiert.

Es wird hiermit ausdrücklich darauf hingewiesen, dass die binäre Kodierung auch ohne Einfügung zusätzlicher Knoten vorgenommen werden kann, d.h. auch dann, wenn die Veränderungsinformation nicht durch Einfügen von Knoten in das Modell eingebracht wird.

Eine binäre Kodierung eines Wasserzeichens ist besonders robust, da sie in der Regel auch nach Weitergabe und Weiterverarbeitung des Modells noch eindeutig erkennbar ist. Es ist für den jeweiligen Wert des Bits ohne Bedeutung, ob sich die Form bei der Weiterverarbeitung leicht verändert hat, solange die Richtung der Veränderung im Vergleich zu dem ursprünglichen Zustand beibehalten wird. Z. B. durch Vergleich mit der ursprünglichen Form kann der binäre Code daher zuverlässig bestimmt werden (so genanntes nicht blindes Verfahren der Detektion eines Wasserzeichens).

Außerdem gehört zum Umfang der Erfindung eine Anordnung zum Einprägen von Wasserzeichen in ein Modell einer linienartigen oder flächenartigen Form, insbesondere in ein NURBS (Non-Uniform Rational B-Splines) Modell, wobei das Modell eine Mehrzahl von Splines aufweist, die in ihrer Gesamtheit die Form bilden, wobei den Splines Kontrollpunkte zugeordnet sind, sodass durch Veränderung der Lage der Kontrollpunkte und/oder von Gewichten der Kontrollpunkte ein Verlauf des jeweils zugeordneten Splines verändert und damit kontrolliert werden kann, und wobei den Splines Knoten zugeordnet sind, die auf einem durch den jeweils zugeordneten Spline gebildeten Teil der Form liegen. Die Anordnung weist eine Veränderungseinrichtung auf, die ausgestaltet ist, beim Einprägen eines Wasserzeichens in das Modell die Form durch eine oder mehrere der folgenden Maßnahmen zu verändern:

a) die Lage von zumindest einem Kontrollpunkt wird verändert,

b) ein Gewicht, mit dem ein Kontrollpunkt auf die Form einwirkt und damit zumindest einen Bereich der Form beeinflusst, wird für zumindest einen Kontrollpunkt verändert und/oder

c) zumindest ein zusätzlicher Kontrollpunkt wird in das Modell eingefügt.

Die Veränderungseinrichtung ist ausgestaltet, eine Information darüber, wie die Veränderung der Form rückgängig gemacht werden kann, (Veränderungsinformation) durch Einfügen zumindest eines zusätzlichen Knotens in das Modell einzubringen.

Ferner gehört zum Umfang der Erfindung ein Computerprogramm, das bei Ablauf auf einem Computer oder Computer-Netzwerk das erfindungsgemäße Verfahren in einer seiner Ausgestaltungen ausführt.

Weiterhin gehört zum Umfang der Erfindung ein Computerprogramm mit Programmcode-Mitteln, um das erfindungsgemäße Verfahren in einer seiner Ausgestaltungen durchzuführen, wenn das Programm auf einem Computer oder Computer-Netzwerk ausgeführt wird. Insbesondere können die Programmcode-Mittel auf einem computerlesbaren Datenträger gespeichert sein.

Außerdem gehört zum Umfang der Erfindung ein Datenträger, auf dem eine Datenstruktur gespeichert ist, die nach einem Laden in einen Arbeits- und/oder Hauptspeicher eines Computers oder Computer-Netzwerkes das erfindungsgemäße Verfahren in einer seiner Ausgestaltungen ausführen kann.

Auch gehört zum Umfang der Erfindung ein Computerprogramm-Produkt mit auf einem maschinenlesbaren Träger gespeicherten Programmcode-Mitteln, um das erfindungsgemäße Verfahren in einer seiner Ausgestaltungen durchzuführen, wenn das Programm auf einem Computer oder Computer-Netzwerk ausgeführt wird.

Dabei wird unter einem Computer-Programmprodukt das Programm als handelbares Produkt verstanden. Es kann grundsätzlich in beliebiger Form vorliegen, so zum Beispiel auf Papier oder einem computerlesbaren Datenträger und kann insbesondere über ein Datenübertragungsnetz verteilt werden.

Bei der Ausführung des erfindungsgemäßen Verfahrens auf einem Computer kann der Computer, gesteuert durch ein Computerprogramm und/oder durch eine Struktur eines entsprechend gestalteten mikroelektronischen Bauteils (z. B. eines FGPA, Field Programmable Gate Array), den zumindest einen Kontrollpunkt einfügen, verändern und/oder sein Gewicht verändern und kann außerdem die Veränderungsinformation durch Einfügen des zusätzlichen Knotens in das Modell einbringen.

Im Folgenden wird die Erfindung anhand von Ausführungsbeispielen näher erläutert, die in den Figuren schematisch dargestellt sind. Die Erfindung ist jedoch nicht auf die Beispiele beschränkt. Alle Merkmale der folgenden Beschreibung könnten einzeln oder in Kombination mit einer der zuvor beschriebenen Ausgestaltungen der Erfindung kombiniert werden. Im Einzelnen zeigt:

Fig. 1     eine NURBS-Kurve mit einem zugehörigen Kontrollpolygon,

Fig. 2     die NURBS-Kurve gemäß Fig. 1 mit ihren Knoten,

Fig. 3     ein Beispiel für die Kodierung einer Information durch Änderung des Gewichts eines Kontrollpunktes

Fig. 4     ein Beispiel für die Kodierung einer Information durch Verschiebung eines Kontrollpunktes und

Fig. 5     eine Anordnung zum Einprägen eines Wasserzeichens.

Die folgenden Ausführungsbeispiele beziehen sich auf NURBS-Kurven und sind auf NURBS-Flächen übertragbar. Im Folgenden wird jede NURBS-Kurve bzw. NURBS-Fläche im Modell als Einbettungsprimitive bezeichnet und die Modifikation einer einzelnen Einbettungsprimitive beschrieben. Insbesondere ist es möglich, durch Modifikation einer Einbettungsprimitive in der erfindungsgemäßen Weise ein Merkmal oder mehrere Merkmale eines Wasserzeichens zu kodieren, z. B. eines digitalen Wasserzeichens. Das gesamte Wasserzeichen wird dann durch die Gesamtheit der modifizierten Einbettungsprimitiven gebildet bzw. ist daraus erkennbar. Die Vorgehensweise zum Einbetten (Kodieren) eines kompletten digitalen Wasserzeichens wird später beschrieben. Zunächst wird ein Beispiel für die Kodierung eines Merkmals in einer einzelnen Einbettungsprimitive beschrieben.

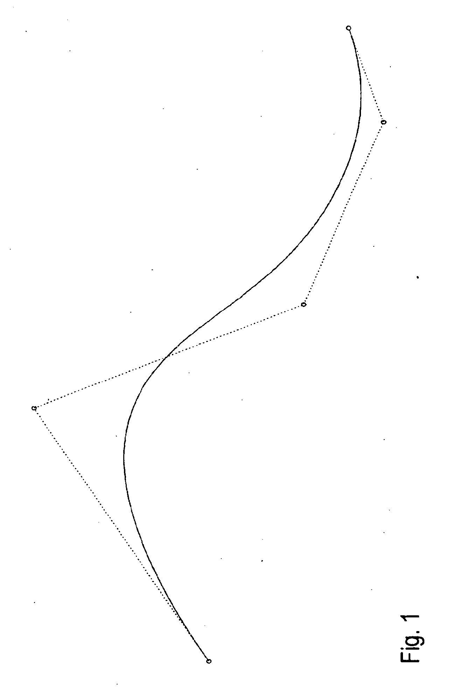

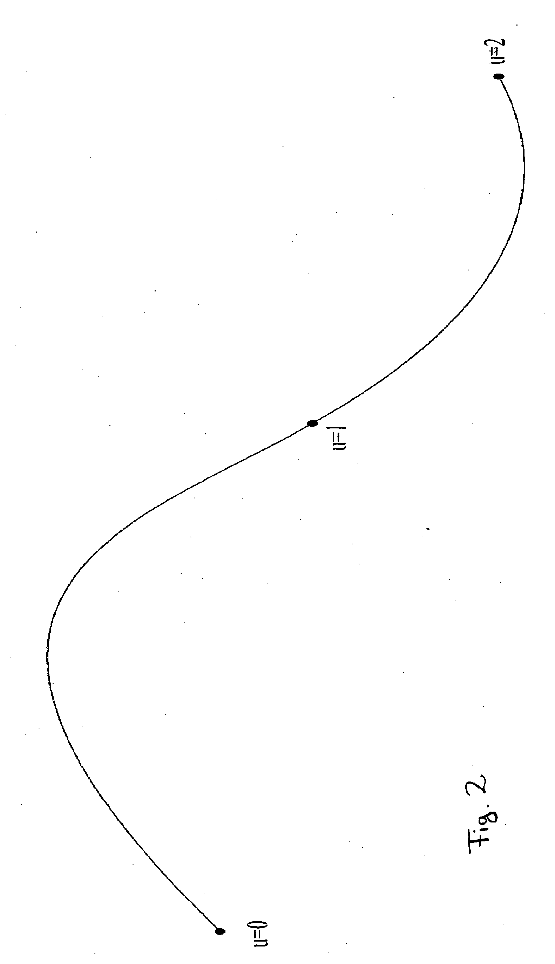

Wie oben bereits beschrieben, wird eine NURBS-Kurve durch ein Kontrollpolygon und einen Knotenvektor definiert. Das Kontrollpolygon besteht aus einer Anzahl von Kontrollpunkten. Der Knotenvektor enthält eine Reihe von Knoten. Die Kontrollpunkte bestimmen den Verlauf der Kurve, während die Knoten die Anschlusspunkte zwischen angrenzenden Kurvenstücken definieren. Fig. 1 und Fig. 2 zeigen beispielhaft eine NURBS-Kurve. Das in Fig. 1 zusätzlich dargestellte Kontrollpolygon der Kurve ist durch die durchbrochenen Linien dargestellt. Auf dem Kontrollpolygon liegen insgesamt fünf Kontrollpunkte, nämlich an den Knickpunkten des Polygons.

Die Lage von Punkten (die Knoten) auf der Kurve (Fig. 2, durch kleine ausgefüllte Kreise dargestellt) wird durch den Wert eines Parameters u bestimmt.

In dem Beispiel von Fig. 1 und Fig. 2 ist die NURBS-Kurve C(u) eine Kurve dritten Grades, die aus zwei Segmenten besteht. Sie ist eine Einbettungsprimitive im Sinne der obigen Definition. Die fünf Kontrollpunkte können ohne Beschränkung der Allgemeinheit in die x-y-Ebene eines kartesischen Koordinatensystems X-Y-Z gelegt werden und ihre Gewichte können jeweils auf 1 gesetzt werden. Die entsprechenden (x,y,z) Koordinaten der fünf Kontrollpunkte $P_0$ bis $P_4$ lauten in dem Beispiel von Fig. 1 und Fig. 2:

$$P_0 = (-6.680, -5.620, 0)$$

$$P_1 = (-5.205, -4.735, 0)$$

$$P_2 = (-4.601, -6.103, 0)$$

$$P_3 = (-3.541, -6.506, 0)$$

$$P_4 = (-2.991, -6.331, 0)$$

Die drei Knoten (Fig. 2) sind durch den Knotenvektor

$$U = \{0,0,0,0,1,2,2,2,2\}$$

bestimmt, wobei der erste und der letzte Knoten jeweils die Multiplizität 4 aufweisen und der mittlere Knoten die beiden Kurvensegmente trennt. Die Parameterwerte des Parameters u, die die Elemente des Knotenvektors sind, lauten also u=0, u=1 und u=2.

NURBS-Flächen sind durch zwei Parameter u, v gekennzeichnet, so dass sich ein Netz von Kontrollpunkten und zwei Knotenvektoren (je einer in u- und v- Richtung) ergibt. Die folgenden Überlegungen gelten daher auch für NURBS-Flächen.

Beim Einbetten eines Merkmals eines Wasserzeichens wird zunächst die Geometrie (Form) der NURBS-Kurve geändert. Anschließend wird zusätzlich zum rückgängig Machen der Änderung notwendige Information in der NURBS-Kurve kodiert. Daher ist die Reversibilität des Wasserzeichens gegeben.

Zunächst wird die Änderung der Geometrie beschrieben.

Wie oben erwähnt kann ein Kontrollpunkt durch seine Raumkoordinaten (x, y, z) sowie durch ein zusätzliches Gewicht definiert werden. Das Gewicht bestimmt, wie stark sich der Kurvenverlauf dem Kontrollpolygon in der Nähe des Kontrollpunktes annähert. Das hier beschriebene Ausführungsbeispiel der Erfindung ändert das Gewicht des Kontrollpunkts und/oder die Raumkoordinaten des Kontrollpunktes, um ein einzelnes Merkmal des Wasserzeichens zu kodieren. Vorzugsweise sind Toleranzen für geometrische Veränderungen des ursprünglichen NURBS-Modell vorgegeben, die exakt eingehalten werden können. Zum Beispiel darf sich Lage der NURBS-Kurve lokal um nicht mehr als einen vorgegebenen Wert ändern. Der Wert kann z. B. in den Einheiten des verwendeten Koordinatensystems definiert sein.

Der Lösungsweg des Ausführungsbeispiels nutzt die Verschiebung oder die Änderung des Gewichts eines ausgewählten Kontrollpunkts der Kurve, um einen Referenzpunkt auf der Kurve entlang einer festgelegten Richtung zu bewegen. Der Referenzpunkt ist definiert als derjenige Punkt auf der Kurve, der dem Kontrollpunkt am nächsten liegt, oder als derjenige Punkt auf der Kurve, dessen gerade Verbindungslinie zu dem Kontrollpunkt senkrecht zu der Tangente steht, die die Kurve in dem Referenzpunkt berührt.

Die Ermittlung des Kontrollpunktes, der bei der Einbringung des Merkmals verwendet wird, wird durch einen Schlüssel gesteuert. Bei einer bevorzugten Ausführungsform wird der Kontrollpunkt durch eine Pseudo-Zufallszahl bestimmt, die mit einem Hashwert des Schlüssels initialisiert wird.

Somit kann wie folgt ein binäres Merkmal kodiert werden:

Zustand A (erster Bitwert): Der Referenzpunkt auf der Kurve wurde in Richtung auf den Kontrollpunkt hin bewegt.

Zustand B (zweiter Bitwert): Der Referenzpunkt auf der Kurve wurde in Richtung vom Kontrollpunkt weg bewegt.

Die optional außerdem getroffene Entscheidung, ob ein Merkmal tatsächlich in einer bestimmten ausgewählten Einbettungsprimitive kodiert wird, ist vorzugsweise abhängig davon, ob die geforderte Verschiebung des Referenzpunktes durch Änderung des Gewichts oder durch Verschiebung des Kontrollpunktes realisiert werden kann. Dies kann vorab geprüft werden, bevor das Merkmal tatsächlich kodiert wird. Weitere Kriterien wie z.B. Krümmungsmaße oder Kontinuitätsbedingungen am Übergang zwischen Einbettungsprimitiven können ebenfalls in die Entscheidungsfindung eingehen.

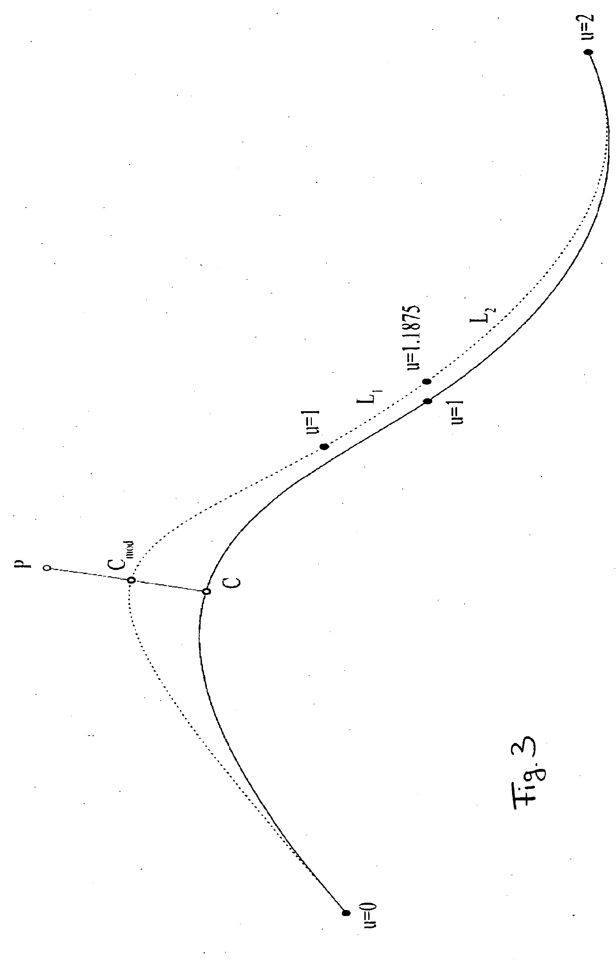

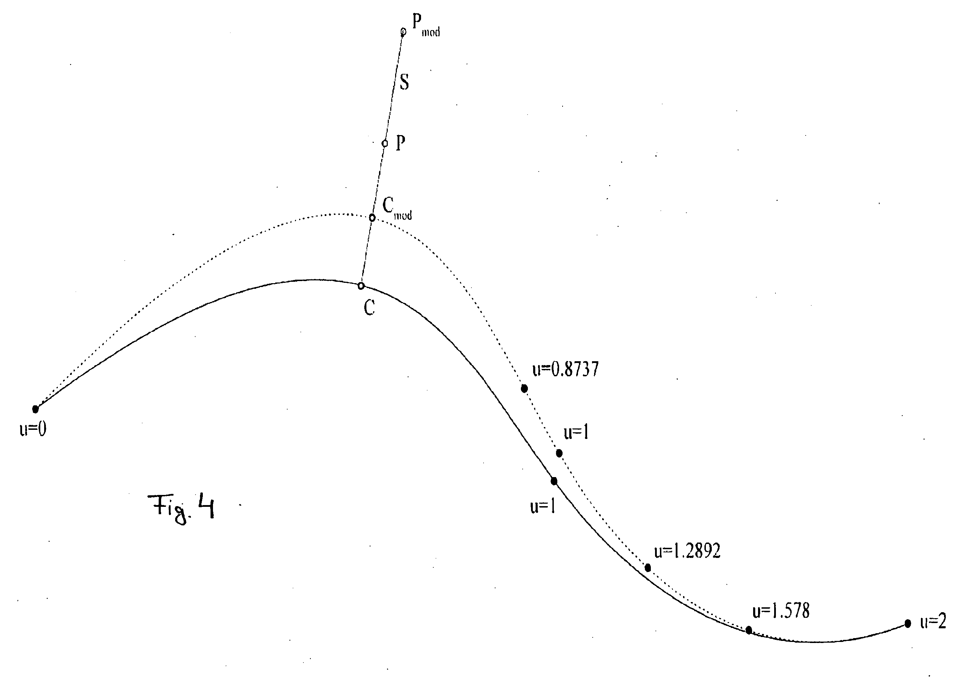

Fig. 3 zeigt beispielhaft eine spezielle Art der Ausführung des Verfahrens durch Änderung des Gewichts eines Kontrollpunktes. Auf eine andere Art der Ausführung wird noch anhand von Fig. 4 eingegangen.

Die Einstellung des Zustandes B erfolgt durch Verschiebung des Referenzpunktes C auf der Kurve zum Punkt $C_{mod}$ in Richtung des Kontrollpunktes P. Der Betrag d der Verschiebung ist in dieser Art der Ausführung des Verfahrens durch den Euklidischen Abstand zwischen C und $C_{mod}$ gegeben. Es können jedoch auch andere geeignete Metriken zur Spezifikation der Verschiebung dienen.

In diesem Fall wurde der Referenzpunkt auf der Originalkurve so gewählt, dass er der Punkt mit dem geringsten Abstand zum gewählten Kontrollpunkt ist. Die Wahl des Referenzpunktes kann jedoch in jeder beliebigen anderen definierten Weise erfolgen.

Kodierung der Information zur Invertierung der Geometrieänderung: Durch die Möglichkeit, die Änderung der Geometrie ohne Zugriff auf das Original wieder rückgängig zu machen (d.h. das Original wieder herzustellen) wird ein reversibles Wasserzeichenverfahren realisiert. Die dazu notwendige Information wird in der veränderten NURBS-Kurve durch Einfügen eines zusätzlichen Knotens in den Knotenvektor kodiert.

Eine Knotenspanne ist jener Teil der Kurve, der zwischen zwei aufeinander folgenden Knoten liegt, die jeweils durch ihren Parameterwert gekennzeichnet sind. Innerhalb dieser Knotenspanne wird ein Parameterwert gewählt, an dem ein zusätzlicher Knoten eingefügt wird.

Bei einer bevorzugten Ausführungsform des Verfahrens wird über das Verhältnis der Längen der neu entstandenen Knotenspannen die Änderung des Gewichts bzw. die Verschiebung des Kontrollpunkts, die zur Geometrieänderung notwendig war, kodiert. In Fig. 3 wird ein neuer Knoten am Parameterwert u=1,1875 in der Knotenspanne der Länge L eingefügt. Es entstehen zwei neue Knotenspannen der Länge $L_1$ und $L_2$. Das Verhältnis dieser Längen wird so eingestellt, dass es die Änderung des Gewichtes bzw. die Verschiebung des Kontrollpunktes, kodiert.

Das Einfügen eines Knotens kann ohne Änderung der Form der Einbettungsprimitive durch das Einfügen eines zusätzlichen Kontrollpunkts, wie von Piegl und Tiller (L. Piegl et al.: Modifying the shape rational B-splines. Part 1: curves, veröffentlicht in Computer Aided Design 21, 8 (1989), Seiten 509-518) für NURBS-Kurven und NURBS-Flächen beschrieben, erfolgen. Es können jedoch auch andere geeignete Verfahren zum Einfügen eines Knotens gewählt werden.

Die Wahl der Knotenspanne kann unter Verwendung eines Schlüssels gewählt werden. Dieser Schlüssel kann, aber muss nicht, verschieden von dem für die Auswahl des Kontrollpunktes verwendeten Schlüssel sein. Eine bevorzugte Form der Ausführung ist die Auswahl anhand einer Pseudo-Zufallszahl, die mit einem Hashwert des Schlüssels initialisiert wird.

Die Einbettung eines Bits (d.h. des Zustandes A oder B) in die Kurve durch Modifikation des Gewichts eines Kontrollpunktes und daraus folgende Verschiebung eines Referenzpunktes auf der Kurve entlang der Verbindungslinie zum Kontrollpunkt bzw. von diesem weg kann beispielhaft wird wie im Folgenden beschrieben durchgeführt werden. Dabei wird der Verschiebung auf den Kontrollpunkt hin ein Zustand, der Richtung vom Kontrollpunkt weg der andere Zustand zugeordnet. Die Vorgehensweise wird anhand der in Fig. 3 dargestellten originalen und modifizierten Kurve (durchbrochene Linie) am Beispiel einer Verschiebung zum Kontrollpunkt hin erläutert.

Die Zahlenwerte beziehen sich auf das Beispiel gemäß Fig. 1 und Fig. 2, das oben erläutert wurde.

1. Der zu modifizierende Kontrollpunkt P wird auf Basis eines geheimen Schlüssels ausgewählt. Hier wird der Kontrollpunkt an der Stelle (-5.205, -4.735, 0) verwendet.

2. Der vom Kontrollpunkt P aus nächste Punkt auf der Kurve wird ermittelt. Dies ist der Referenzpunkt C.

3. Das Gewicht des Kontrollpunkts P wird so geändert, dass sich der neue Referenzpunkt $C_{mod}$ auf der modifizierten Kurve in einer bestimmten Distanz d vom Referenzpunkt C befindet. Im Beispiel beträgt d = 0,2290 Einheiten.

4. Es wird das Verhältnis r des Betrags der Änderung des ursprünglichen Gewichts w zum neuen Gewicht $w_{mod}$ berechnet (im Beispiel ist w = 1 und $w_{mod}$ = 2,5):

$$r = \frac{|(w_{mod} - w)|}{w_{mod}} = 0,6$$

5. Basierend auf einem geheimen Schlüssel wird eine Knotenspanne mit einer Länge L größer Null gewählt, die zur Kodierung von r verwendet wird. Bei einer Knotenspanne handelt es sich um das halboffene Intervall zwischen 2 Knoten, d.h. den Parameterbereich eines Segmentes. Für die Beispielkurve ergeben sich die beiden verwendbaren Knotenspannen [0, 1) und [1, 2) mit einer Länge L größer Null. Hier wird die Knotenspanne [1, 2) der Länge L = 1 verwendet.

6. Es wird ein neuer Knoten so in das gewählte Intervall eingefügt, dass die obere bzw. untere Hälfte des Intervalls (im Folgenden auch als Subintervalle bezeichnet) in die beiden Segmente $L_1$ und $L_2$ geteilt und dadurch r kodiert wird. Hier entspricht der unteren Hälfte das Subintervall [1, 1,5), der oberen Hälfte das Subintervall (1,5, 2). Mit dem Skalierungsfaktor X > 2 und

$$r = \frac{L_1}{L_2} \quad \text{und} \quad \frac{L}{X} = L_1 + L_2 \quad \text{ergibt sich} \quad L_2 = \frac{L}{X(1+r)}$$

Im obigen Zahlenbeispiel ergibt sich L2 = 0,3125 mit L = 1, X = 2, und r = 0,6. Um das Sicherheitsniveau zu erhöhen, kann der Skalierungsfaktor basierend auf einem geheimen Schlüssel gewählt werden. Im Beispiel wurde X = 2 verwendet.

Da r positiv definiert ist, die Änderung des Gewichtes jedoch auch negativ sein kann (entsprechend einer Reduzierung des ursprünglichen Gewichts), wird einer bestimmten Änderung des Vorzeichens ein bestimmtes Subintervall für die Kodierung zugeordnet. Diese Zuordnung wird durch einen geheimen Schlüssel moduliert.

Im Beispiel wurde das Subintervall [1, 1,5) verwendet und es wird ein Knoten bei u = 1,500 - 0,3125 = 1,1875 eingefügt.

Wie in dem vorangegangenen Beispiel gezeigt, kann die für das rückgängig Machen einer Gewichtsveränderung (d. h. insbesondere einer Kodierung eines einzelnen Bits) eines einzelnen Kontrollpunktes erforderliche Veränderungsinformation durch - Einfügen eines einzigen Knotens kodiert werden. Das Verhältnis von eigentlicher kodierter Information (hier 1 Bit) und zusätzlichem Knoten beträgt also 1 : 1. Dies ist aber nicht zwangsläufig der Fall. Vielmehr kann das Verhältnis bei anderen Ausführungsformen der Erfindung anders sein. z. B. beträgt es im Folgenden Ausführungsbeispiel 1 : 3.

Die alternative Einbettung des Merkmals durch Verschiebung eines Kontrollpunkts wird anhand von Fig. 4 erläutert:

Die Einbettung eines Bits (d.h. des Zustandes A oder B) in die Kurve durch Verschiebung eines Kontrollpunktes und daraus folgende Verschiebung eines Referenzpunktes auf der Kurve entlang der Verbindungslinie zum Kontrollpunkt bzw. von diesem weg kann beispielhaft wie im Folgenden beschrieben durchgeführt werden. Dabei wird der Verschiebung auf den Kontrollpunkt hin ein Zustand, der Richtung vom Kontrollpunkt weg der andere Zustand zugeordnet.

1. Der zu modifizierende Kontrollpunkt P wird auf Basis eines geheimen Schlüssels ausgewählt. Hier wird der Kontrollpunkt an der Stelle (-5.205, -4.735, 0) verwendet.

2. Der vom Kontrollpunkt P aus nächste Punkt auf der Kurve wird ermittelt. Dies ist der Referenzpunkt C.

3. Der Kontrollpunkt P wird so nach $P_{mod}$ verschoben, dass sich der neue Referenzpunkt $C_{mod}$ auf der modifizierten Kurve in einer bestimmten Distanz d vom Referenzpunkt C befindet. Im Beispiel beträgt d = 0.2290 Einheiten. Der Kontrollpunkt wurde von

P =        (-5.205, -4.735, 0) um d = 0.3819 Einheiten nach

$P_{mod}$ =    (-5.126, -4.361, 0)

verschoben.

4. Der Verschiebungsvektor S von P nach Pmod setzt sich aus den drei Komponenten $S_x$, Sy und $S_z$ zusammen. Hier ist S = (0.07848, 0.3737, 0).

5. Jede der drei Komponenten des Verschiebungsvektors wird einzeln über das Einfügen eines Knotens kodiert. Entsprechend werden drei Knoten in die Einbettungsprimitive einfügt. Basierend auf einem geheimen Schlüssel wird nacheinander für jeden einzufügenden Knoten eine Knotenspanne mit einer Länge L größer Null gewählt, die zur Kodierung verwendet wird. Die Knoten werden nacheinander in die gewählten Knotenspannen eingefügt.

6. Es wird nacheinander je ein neuer Knoten so in jedes gewählte Intervall eingefügt, dass die obere bzw. untere Hälfte (im Sinne des aufsteigenden Parameterwerts u) des Intervalls in die beiden Segmente $L_1$ und $L_2$ geteilt und dadurch eine Komponente des Verschiebungsvektors kodiert wird. Da die Komponenten der Verschiebungsvektoren positiv oder negativ sein können, wird je nach Vorzeichen eine bestimmte Hälfte (im Folgenden auch als Subintervall bezeichnet), für die Kodierung verwendet. Diese Zuordnung wird durch einen geheimen Schlüssel moduliert.

Im Beispiel wurde für die erste Komponente des Verschiebungsvektors die obere Hälfte des Intervalls [1,2] verwendet und es wurde ein Knoten bei

$$u = 1.5 + 0.07848 = 1.57848$$

eingefügt. Für die zweite Komponente wurde die obere Hälfte des Intervalls [0,1] gewählt und ein Knoten bei

$$u = 0.5 + 0.3737 = 0.8737$$

eingefügt. Die dritte Komponente ist Null und es wurde das Intervall [1,1.57848) gewählt, daher wurde ein Knoten bei

$$u = 1.289 + 0 = 1.289$$

eingefügt.

Zuvor wurde beschrieben, wie ein Merkmal (hier: ein Bit) in eine Einbettungsprimitive eingebracht wird. Es können jedoch auch mehrere Merkmale (z. B. mehrere Bits) in einer Einbettungsprimitive kodiert werden. In diesem Fall wird vorzugsweise sichergestellt, dass sich die Merkmale gegenseitig nicht oder nur sehr gering beeinflussen. Dies kann durch entsprechende Wahl von Kontrollpunkten innerhalb der Einbettungsprimitive erreicht werden, da sich die Änderung des Gewichts eines Kontrollpunktes $P_i$ nur in einem begrenzten Bereich der Kurve auswirkt. Diese Überlegung gilt auch für NURBS-Flächen.

Falls notwendig, können vor der Einbettung weitere Kontrollpunkte und Knoten so in die Kurve eingefügt werden, dass sich deren Form durch die Anwendung des zuvor beschriebenen Einbettungsverfahrens nicht oder nur gering verändert.

Zusätzliche Kontrollpunkte können auch dazu dienen, die Sicherheit des Verfahrens zu erhöhen. Diese Kontrollpunkte und Knoten können vor oder nach der Durchführung des Einbettungsverfahrens eingefügt werden.

Die Positionen, an denen neue Kontrollpunkte und Knoten eingefügt werden, kann über einen geheimen Schlüssel gesteuert werden.

Eine bevorzugte Form der Ausführung ist das Einfügen von Knoten wie von Les Piegl, Wayne Tiller: "The Nurbs Book" (2nd edition), Springer Verlag, Januar 1997, ISBN 3540615458, für NURBS-Kurven und NURBS-Flächen beschrieben. Dieselbe Technik kann auch angewandt werden, falls weitere Knoten zur Kodierung der Information zum Rückgängigmachen des Einbettungsprozesses notwendig werden.

Die folgende Beschreibung betrifft die Detektion eines Merkmals in einem Spline-Modell, also den Vorgang des Identifizierens der kodierten Information und (optional) des rückgängig Machens.

Im Bereich digitaler Wasserzeichen wird zwischen blinden und nicht-blinden Verfahren unterschieden. Nicht-blinde Verfahren benötigen im Gegensatz zu blinden Verfahren zusätzlich zum Datensatz des veränderten Modells den originalen, nicht veränderten Datensatz (oder Daten, aus denen der nicht veränderte Datensatz ermittelt werden kann) um das digitale Wasserzeichen nachzuweisen.

Die vorliegende Erfindung umfasst sowohl blinde wie auch ein nicht-blinde Verfahren. Beispiele werden noch dargestellt. Das blinde Verfahren kann so ausgeführt werden, dass das digitale Wasserzeichen aus dem veränderten Modell entfernt und so das Original wieder hergestellt wird.

Das blinde Verfahren wird vorzugsweise dann durchgeführt, wenn das veränderte (markierte) Modell in seiner ursprünglichen, NURBS-basierten Repräsentation vorliegt.

Die Auswertung eines Merkmals wird wie folgt durchgeführt:

1. Falls nach Durchführung des Einbettungsverfahrens noch Kontrollpunkte und (weitere) Knoten eingefügt wurden, werden diese zunächst entfernt. Falls notwendig erfolgt die Auswahl dieser Kontrollpunkte und Knoten anhand eines Schlüssels.

2. Es werden nun Knotenspanne und Kontrollpunkt in der Einbettungsprimitive gewählt, wenn erforderlich basierend auf dem entsprechenden Schlüssel. Wie oben erwähnt kann ein gemeinsamer oder je ein unterschiedlicher Schlüssel für die Festlegung von Knotenspanne und Kontrollpunkt gewählt werden.

3. Die Änderung des ursprünglichen Gewichts des Kontrollpunktes bzw. die Verschiebung des Kontrollpunkts ergibt sich in der bevorzugten Form der Ausführung des Verfahrens durch die Auswertung der aus dem Knotenvektor extrahierten Längen $L_1$ und $L_2$ der während des Einbettungsprozesses erzeugten Knotenspannen (s.o.). Anhand der Änderung des Gewichts kann entschieden werden, ob Zustand A oder Zustand B kodiert wurde.

Falls die durch den Einbettungsprozess eingebrachte Änderung wieder rückgängig gemacht werden soll, werden die folgenden Schritte im Anschluss an Schritt 3 durchgeführt.

4. Der während des Einbettens des Merkmals eingefügte zusätzliche Knoten wird entfernt.

5. Das originale Gewicht des Kontrollpunktes wird wieder eingestellt bzw. der Kontrollpunkt wird an seine ursprüngliche Position zurückgeschoben.

Falls mehrere Merkmale in der Einbettungsprimitive kodiert wurden, wird Schritt 2 bis Schritt 5 der oben angegebenen Sequenz jeweils für jedes eingebettete Merkmal durchlaufen. Schritt 1 wird nur einmal pro Einbettungsprimitive ausgeführt.

Eine bevorzuge Form der Ausführung der Entfernung von Knoten wird von Piegl und Tiller (s.o.) für NURBS-Kurven und NURBS-Flächen beschrieben.

Im Folgenden wird nun, bezogen auf die obigen Zahlenbeispiele das Detektieren und rückgängig Machen der Veränderung anhand zweier Ausführungsbeispiel beschrieben. Das erste Beispiel bezieht sich auf die oben beschriebene Kodierung durch Veränderung eines Gewichts, das andere auf die Kodierung durch Verschiebung eines Kontrollpunkts.

Basierend auf dem geheimen Schlüssel, der während der Einbettung verwendet wurde, wird der Parameterbereich gewählt, der zur Kodierung von r verwendet wurde. Hier wurde der Bereich [1, 2] der Länge L = 1 verwendet. Innerhalb dieses Bereichs liegt der Knoten, der r kodiert. Im Beispiel ergibt sich der Wert von $L_2$ = 1.500 - 1.1875 = 0.3125, der in der unteren Hälfte der ursprünglichen Knotenspanne [1,2] liegt.

Die Zuordnung zwischen Subintervall und Vorzeichen der Änderung des Gewichts wird mit dem geheimen Schlüssel, der während des Einbettens verwendet wurde, demoduliert. Damit kann zusammen mit der Lage des detektierten Knotens das Vorzeichen der Gewichtsänderung und daraus der eingebettete Zustand abgeleitet werden.

Falls die ursprüngliche Einbettungsprimitive wieder hergestellt werden soll, wird der modifizierte Kontrollpunkt P auf Basis des beim Einbetten verwendeten geheimen Schlüssels ausgewählt. Hier wurde der Kontrollpunkt an der Stelle (-5.205, -4.735, 0) verwendet.

Es ergibt sich mit dem und dem bekannten Skalierungsfaktor X = 2 und

$$r = \frac{L}{X\,L_2} - 1 = \frac{1}{2 \cdot 0.3125} - 1 = 0.6$$

der Betrag der Differenz zwischen ursprünglichen und bekannten modifizierten Gewicht $w_{mod}$ = 2.5 aus

$$|(w_{mod} - w)| = w_{mod}\, r = 2.5 \cdot 0.6 = 1.5.$$

Zusammen mit der Information über das Vorzeichen ergibt sich das ursprüngliche Gewicht w = 2.5 - 1.5 = 1. Der Knoten wird entfernt (hier der Knoten bei u = 1.1875) und das Gewicht des Kontrollpunkts wird wieder auf seinen ursprünglichen Wert, hier w = 1, gesetzt.

Nun folgt das Beispiel, dass sich auf die Kodierung eines Merkmals durch Modifikation eines Kontrollpunkts bezieht.

Basierend auf dem geheimen Schlüssel, der während der Einbettung verwendet wurde, werden nacheinander in umgekehrter Reihenfolge der Einbettung die Parameterbereiche gewählt, die zur Kodierung der Komponenten des Verschiebungsvektors S verwendet wurden.

Die dritte Komponente wurde im Intervall [1,1.578) kodiert. Es wird ein Knoten genau in der Mitte des Intervalls bei u = 1.289 gefunden, daher ergibt sich $S_Z = 0$. Der Knoten wird entfernt.

Die zweite Komponente wurde im Intervall [0,1] kodiert. Es wird ein Knoten bei u = 0.8737 detektiert. Der Knoten wird entfernt. Es ergibt sich

$$S_y = 0.8737 - 0.5 = 0.3737.$$

Die erste Komponente des Verschiebungsvektors wurde im Intervall [1,2) kodiert und es wird ein Knoten bei 1.57848 detektiert. Es ergibt sich

$$S_x = 1.57848 - 1.5 = 0.07848$$

Für jeden der drei Knoten wird die Zuordnung zwischen Subintervall und Vorzeichen der Änderung des Gewichts mit dem geheimen Schlüssel, der während des Einbettens verwendet wurde, demoduliert. Damit ergibt sich der Verschiebungsvektor S zu (0.07848, 0.3737, 0). Der modifizierte Kontrollpunkt $P_{mod}$ wird auf Basis des beim Einbetten verwendeten geheimen Schlüssels ausgewählt. Hier wurde der Kontrollpunkt an der Stelle (-5.205, -4.735, 0) verwendet. Mit dem Verschiebungsvektor S ergeben sich die Richtung der Verschiebung und damit der eingebettete Zustand.

Falls die ursprüngliche Einbettungsprimitive wieder hergestellt werden soll wird der Knoten bei 1.57848 entfernt und der ursprüngliche Kontrollpunkt wieder hergestellt:

$$P = P_{mod} - S$$

Liegt die auszuwertende Einbettungsprimitive nicht in ihrer ursprünglichen NURBS-Repräsentationsform, sondern in einer anderen 3-dimensionalen Repräsentationsform vor (z.B. als Polygonmodell), kann die Auswertung eines Merkmals durchgeführt werden, falls das Originalmodell zum Vergleich vorliegt. Das Verfahren ist sowohl auf die durch Änderung des Gewichts als auch durch Verschiebung des Kontrollpunkts modifizierte Einbettungsprimitiven anwendbar.

Die Forderung nach dem Originalmodell stellt in vielen Anwendungsfällen nur eine geringe Einschränkung der Anwendbarkeit des Verfahrens dar, da in vielen Fällen ein Master-Modell verwendet wird und somit kein unverhältnismäßiger Aufwand zum Auffinden des Originalmodells notwendig ist.

Im Falle der Detektion eines Bits erfolgt die Entscheidung, ob Zustand A oder Zustand B kodiert wurde, anhand der Lage eines Merkmals im zu untersuchenden Modell in Relation zum Originalmodell. Dies gelingt bei einem Kurvenmodell genauso wie bei einem Flächenmodell:

1. Anhand desselben Schlüssels, der auch zum Einbetten verwendet wurde, wird Kontrollpunkt P im Originalmodell gewählt.

2. Der Referenzpunkt C auf der Originalkurve wird, analog zum Einbettungsalgorithmus, ermittelt.

3. Die Lage des Referenzpunktes $C_{mod}$ auf der auszuwertenden Kurve ergibt sich als der Schnittpunkt zwischen der Gerade durch P und C und der auszuwertenden Kurve.

4. Falls $C_{mod}$ zu P hin verschoben wurde, ist Zustand A kodiert. Falls eine Verschiebung von P weg festgestellt wurde, ist Zustand B kodiert. Falls C und $C_{mod}$ zusammenfallen, kann kein Merkmal detektiert werden. Anmerkung: Wenn bei einer anderen Ausführungsform der Erfindung kein digitaler Wert (Bit) kodiert wurde, sondern ein analoger Wert, kann in Schritt 4 das Vorzeichen der Verschiebung ermittelt werden.

5. In der bevorzugten Form der Ausführung des Verfahrens (bei der ein digitaler Wert kodiert wurde) kann der gemessene Euklidische Abstand zwischen C und $C_{mod}$ als zusätzliches Kriterium der Verlässlichkeit der Detektion dienen. Je näher der Euklidsche Abstand an der beim Einbetten verwendeten Verschiebung d liegt, desto wahrscheinlicher ist eine korrekte Detektion. Statt des Euklidschen Abstands können hier auch andere geeignete Metriken zum Einsatz kommen. Anmerkung: Wenn bei einer anderen Ausführungsform der Erfindung kein digitaler Wert kodiert wurde, ergibt der Euklidsche Abstand zusammen mit dem Vorzeichen die Verschiebung und damit die kodierte Information.

Für die nicht-blinde Detektion können Zusatzinformation in Form der für das Einbetten verwendeten Kontrollpunkte, des zum jeweiligen Kontrollpunkt nächsten Punkt auf der Kurve und der Richtung der Verschiebung der Kurve in diesem Punkt (zum Kontrollpunkt hin oder von diesem weg) im Verlauf des Einbettungsprozesses (insbesondere in dem Datensatz des Modells) gespeichert werden.

Es wird nun das Zahlenbeispiel für die nicht blinde Detektion vervollständigt.

Im vorliegenden, oben beschriebenen Beispiel ist der Kontrollpunkt P = (-5.205, - 4.735, 0), der nächste Punkt auf der Kurve ist C = (-5.304, -5.209, 0) und die Richtung der Verschiebung verläuft von C nach P. Der Zustand, der durch diese Informationen beschrieben wird, kann.durch die Bestimmung des Schnittpunktes des von C entlang der Verschiebungsrichtung nach P laufenden Strahls mit der Kurve verifiziert werden. Falls ein Schnittpunkt gefunden wird und dieser innerhalb einer bestimmten Toleranzspanne um die ursprüngliche Verschiebung (im Bespiel d = 0.2290) liegt, gilt der Zustand als verifiziert.

Ist die auszuwertende Einbettungsprimitive Teil einer gerenderten Darstellung (d.h. eines Bildes), so kann unter bestimmten Randbedingungen in der gerenderten Darstellung überprüft werden, ob ein Merkmal in einer Einbettungsprimitive Zustand A oder Zustand B kodiert. Voraussetzung hierfür ist, dass das Originalmodell zum Vergleich vorliegt.

Die grundlegende Idee besteht darin, einen Bildvergleich zwischen dem auszuwertenden Bild und einer gerenderten Darstellung einer bekannten, markierten Version des Originalmodells durchzuführen. Die markierte Version des Originalmodells wird dabei möglichst deckungsgleich mit dem auszuwertenden Bild dargestellt.

Die Deckungsgleichheit zwischen gerenderter Version des Originalmodells und auszuwertendem Bild kann bspw. mit Hilfe photogrammetrischer Verfahren erreicht werden.

Kommt die gerenderte Darstellung der bekannten Einbettungsprimitive der korrespondierenden Einbettungsprimitive im auszuwertenden Bild mit hinreichender Genauigkeit nahe, gilt das Merkmal in der Einbettungsprimitive als verifiziert.

Im Folgenden wird nun noch auf die Kodierung einer Mehrzahl von Merkmalen in ein Modell eingegangen.

Die im NURBS-Modell enthaltenen Einbettungsprimitiven werden entsprechend einer definierten Reihenfolge geordnet und sequentiell nacheinander behandelt. Insbesondere werden die Einbettungsprimitiven nummeriert. Die Einbettungsprimitiven können jedoch auch zu Gruppen zusammengefasst werden, um z.B. Topologie-Information während des Einbettungs- und Detektionsprozesses zu nutzen.

Um die Sicherheit des Verfahrens zu erhöhen, wird die Reihenfolge vorzugsweise auf Basis eines geheimen Schlüssels generiert. Dieser Schlüssel kann, aber muss nicht, mit den während des später erfolgenden Einbettungsprozesses verwendeten Schlüsseln übereinstimmen. Eine bevorzugte Form der Ausführung ist die Erzeugung einer Sequenz von Pseudo-Zufallszahlen, die mit einem Hashwert des Schlüssels initialisiert wird.

Die Information, die durch das digitale Wasserzeichen kodiert wird, kann als eine Folge einzelner Bits ausgedrückt werden. Je nach Größe des Modells und gewünschter Robustheit des digitalen Wasserzeichens können einzelne Bits der Bitfolge, können Teile der Bitfolge oder kann die gesamte Bitfolge mehrfach (redundant) in das Modell eingebracht werden. Die Bitfolge kann zusätzlich vor dem Einbetten in das Modell speziell kodiert werden. Hier können bspw. Verfahren zur Fehlererkennung und Fehlerkorrektur zum Einsatz kommen.

Pro Einbettungsprimitive können z. B. mit dem oben beschriebenen Verfahren ein oder mehrere Bits der Bitfolge durch binäre Merkmale kodiert werden. Eine Untermenge oder die Gesamtmenge aller im Modell enthaltenen Einbettungsprimitiven wird verwendet um die gesamte Bitfolge oder Teile der Bitfolge im Modell zu kodieren. Dazu werden die Einbettungsprimitiven entsprechend der definierten Reihenfolge abgearbeitet und mit dem oben beschriebenen Einbettungsverfahren behandelt.

Um die Sicherheit des Verfahrens zu erhöhen, kann die Veränderungsinformation, die einer bestimmten Einbettungsprimitive oder mehreren Einbettungsprimitiven zugeordnet ist, in einer anderen Einbettungsprimitive kodiert werden. D. h. die Veränderung der Form erfolgt nicht in derselben Einbettungsprimitive wie die Kodierung der Veränderungsinformation. Die Auswahl der korrespondierenden Einbettungsprimitiven erfolgt z. B. anhand eines geheimen Schlüssels.

Für die Detektion des Wasserzeichens (hier: der Bitfolge) kommt vorzugsweise das oben beschriebene blinde Detektionsverfahren zum Einsatz, wenn das zu untersuchende Modell in der ursprünglichen Spline-Repräsentationsform vorliegt.

Die Einbettungsprimitiven werden dann insbesondere in derselben Reihenfolge wie während des Einbettens bearbeitet. Zur Berechnung der korrekten Reihenfolge ist gegebenenfalls derselbe Schlüssel notwendig, der während des Einbettungsprozesses verwendet wurde.

Die in die Einbettungsprimitiven eingebrachten Merkmale werden entsprechend ausgelesen und die Bitfolge wird rekonstruiert (und optional dekodiert). Falls das Wasserzeichen aus dem Modell entfernt werden soll, werden entsprechend die Änderungen der Einbettungsprimitiven rückgängig gemacht.

Liegt das zu untersuchende Modell in einer anderen 3D-Repräsentationsform vor, ist im Allgemeinen ein Vorverarbeitungsschritt notwendig, um es möglicht exakt am Originalmodell auszurichten. Operationen dieser Art werden als Registrierungsverfahren bezeichnet. Es kann jedes geeignete Registrierungsverfahren für 3D-Modelle eingesetzt werden. Beispielsweise kann hier das von Praun in: Praun E., Hoppe H., Finkelstein A.: Robust Mesh Watermarking. Proceedings of the Conference on Computer Graphics (SIGGRAPH '99), ACM Press, Seiten 49-56, beschriebene Verfahren verwendet werden.

Anschließend werden die in die Einbettungsprimitiven eingebrachten Merkmale ausgelesen und die Bitfolge wird rekonstruiert und dekodiert. Die Einbettungsprimitiven werden dabei in derselben Reihenfolge wie während des Einbettens bearbeitet. Zur Berechnung der korrekten Reihenfolge ist gegebenenfalls derselbe Schlüssel notwendig, der während des Einbettungsprozesses verwendet wurde.

Liegt das zu untersuchende Modell in gerenderter Darstellung vor, werden zunächst die Rendering-Parameter so genau wie möglich ermittelt. Über Bildvergleiche wird anschließend das in das Modell eingebrachte Wasserzeichen verifiziert.

Die Parameter des Rendering-Prozesses, die verwendet wurden um das auszuwertende Bild aus dem Modell zu generieren, sind im Allgemeinen unbekannt und werden daher zunächst so genau wie möglich ermittelt:

Rendering-Parameter wie Beleuchtungs-Einstellung, Oberflächeneigenschaften und Shading-Modelle (Gouraud, Phong, etc.) können im Allgemeinen nur abgeschätzt werden.

Die Kamera-Position bestimmt die Ansicht des Modells, die im Bild dargestellt ist. Ihre möglichst genaue Ermittelung ist von besonderer Bedeutung, da sie über die Güte der Deckungsgleichheit zwischen den Bildpaaren entscheidet. Die Ermittelung der Kamera-Position kann bspw. mit Hilfe photogrammetrischer Verfahren mit hoher Genauigkeit erfolgen. Eine mögliche Ausführung ist der Vergleich korrespondierender Passpunkte im auszuwertenden Bild und Originalmodell, wie z.B. von Hartley und Zisserman in: Hartley R., Zisserman A.: Multiple View Geometry. Cambridge University Press (2003) beschrieben.

Alle ausgelieferten Versionen des Modells, die mit einem Wasserzeichen versehen waren, werden entweder erneut aus dem Originalmodell erzeugt oder aus einem Datenspeicher ausgelesen und entsprechend der ermittelten Kameraparameter gerendert. Der paarweise Bildvergleich aller so erzeugten Bilder mit dem zu untersuchenden Bild liefert für das korrekte Wasserzeichen den besten Vergleichswert. Als Vergleichsverfahren sind geeignete Methoden zur Ermittelung der Ähnlichkeit zwischen Bildern anwendbar. Z. B. kann ein neuronales Netzwerk mit den gerenderten Versionen der markierten Modelle trainiert werden und als Klassifikator für das zu untersuchende Bild dienen.

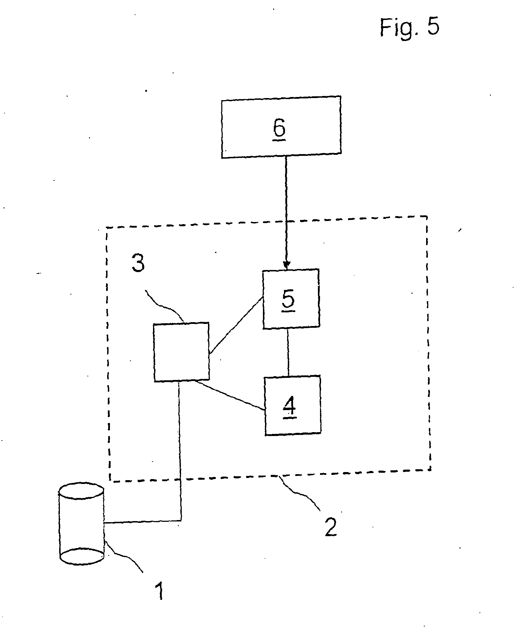

Fig. 5 zeigt eine Ausführungsform einer Anordnung zum Einprägen eines Wasserzeichens. Daten eines Modells sind in einem Datenspeicher 1 abgelegt, der mit einer Veränderungseinrichtung 2 verbunden ist. Die Veränderungseinrichtung 2 weist eine Eingabe-/Ausgabeeinrichtung 3 auf, die ausgestaltet ist, Daten aus dem Datenspeicher 1 ein- und auszulesen. Eingabe-/Ausgabeeinrichtung 3 es wiederum mit einer Kodierungseinrichtung 4 verbunden, durch die die Kodierung der Daten des Modells, d. h. das Einprägen des Wasserzeichen erfolgt. Die Kodierungseinrichtung 4 wird durch eine Steuerungseinrichtung 5 gesteuert, die wiederum über die Eingabe-/Ausgabeeinrichtung 3 auf die Daten in dem Datenspeicher 1 zugreifen kann. Außerdem kann über Eingabemittel 6 (z. B. eine Tastatur) von außen auf die Steuerungseinrichtung 5 eingewirkt werden.

Die Erfindung führt zu folgenden Vorteilen gegenüber dem Stand der Technik, hier bezogen auf den speziellen Anwendungsfall von NURBS-Modellen:

Durch den Einsatz etablierter Modellierungstechniken für NURBS-Kurven und NURBS-Flächen, die auf Modifikation der Gewichte von Kontrollpunkten beruhen, können Robustheit des digitalen Wasserzeichens und Stärke der Änderungen am NURBS-Modell durch das Wasserzeichen optimal gegeneinander abgewogen werden:

Die Erfindung ermöglicht es, ein robustes digitales Wasserzeichen in NURBS-Modelle einzubringen. Die Robustheit wird durch Änderungen der äußeren Form, d.h. der Geometrie des NURBS-Modells realisiert.

Die kontrollierte Änderung der äußeren Form macht die Detektion eines digitalen Wasserzeichens in anderen Repräsentationsformen möglich.

Insbesondere können gleichzeitig Randbedingungen im Hinblick auf die erlaubten Änderungen der Geometrie eingehalten werden.

Ein weiterer entscheidender Vorteil des beschriebenen Verfahrens ist die Möglichkeit der vollkommenen Reversibilität der durch das digitale Wasserzeichen eingeführten Änderungen am NURBS-Modell ohne Kenntnis des Originals (z. B. in Kombination mit einem blinden Verfahren der Detektion). Diese Eigenschaft wird in vielen Fällen den Einsatz eines digitalen Wasserzeichens für NURBS-basierte CAD-Modelle überhaupt erst möglich machen.

**Patentansprüche**

1. Verfahren zum Herstellen von Industriegütern oder anderen Gegenständen, insbesondere von Kraftfahrzeug-Karosserien, wobei zur Konstruktion einer linienartigen oder flächenartigen Form des Gegenstandes in ein Modell der linienartigen oder flächenartigen Form ein Wasserzeichen eingeprägt wird, wobei das Modell eine Mehrzahl von Splines aufweist, die in ihrer Gesamtheit die Form bilden, wobei den Splines Kontrollpunkte zugeordnet sind, sodass durch Veränderung der Lage der Kontrollpunkte ein Verlauf des jeweils zugeordneten Splines verändert und damit kontrolliert werden kann, und wobei den Splines Knoten zugeordnet sind, die auf einem durch den jeweils zugeordneten Spline gebildeten Teil der Form liegen, und wobei beim Einprägen eines Wasserzeichens in das Modell die Form durch eine oder mehrere der folgenden Maßnahmen verändert wird:

   a) die Lage von zumindest einem Kontrollpunkt wird verändert,
   b) ein Gewicht, mit dem ein Kontrollpunkt auf die Form einwirkt und damit zumindest einen Bereich der Form beeinflusst, wird für zumindest einen Kontrollpunkt verändert und/oder
   c) zumindest ein zusätzlicher Kontrollpunkt wird in das Modell eingefügt,

   **dadurch gekennzeichnet,**
   **dass** eine Veränderungsinformation darüber, wie die Veränderung der Form rückgängig gemacht werden kann, durch Einfügen zumindest eines zusätzlichen Knotens in das Modell eingebracht wird.

2. Verfahren nach dem vorhergehenden Anspruch, wobei ein binärer Code mit zumindest einem Bit vorgegeben ist, der durch das Einprägen des Wasserzeichens in das Modell codiert werden soll, wobei das Bit einen ersten Wert und einen zweiten Wert annehmen kann und wobei das Bit durch eine lokale Verlagerung der Form quer zum Verlauf der Form, indem eine oder mehrere der Maßnahmen a) bis c) in Anspruch 1 ausgeführt werden, codiert wird, sodass die lokale Verlagerung in einer ersten Richtung den ersten Wert codiert und die lokale Verlagerung in einer zweiten, der ersten Richtung entgegengesetzten Richtung den zweiten Wert codiert.

3. Verfahren nach einem der vorhergehenden Ansprüche, wobei eine logische Zuordnung eines Kontrollpunkts, der oder dessen Gewicht bei der Ausführung einer oder mehrerer der Maßnahmen a) bis c) verwendet wird, zu dem zusätzlich eingefügten Knoten, mit dem die der Veränderung durch den Kontrollpunkt entsprechende Veränderungsinformation in das Modell eingebracht wird, unter Verwendung eines Schlüssels hergestellt wird.

4. Computerprogramm mit Programmcode-Mitteln, um ein Verfahren gemäß einem der vorhergehenden Ansprüche durchzuführen, wenn das Computerprogramm auf einem Computer oder Computer-Netzwerk ausgeführt wird.

5. Datenträger oder Computersystem, auf dem eine Datenstruktur gespeichert ist, die nach einem Laden in einen Arbeits- und/oder Hauptspeicher eines Computers oder Computer-Netzwerkes das Verfahren nach einem der vorhergehenden Ansprüche ausführt.

6. Anordnung zum Herstellen von Industriegütern oder anderen Gegenständen, insbesondere von Kraftfahrzeug-Karosserien, wobei die Anordnung ausgestaltet ist, bei der Konstruktion einer linienartigen oder flächenartigen Form des Gegenstandes in ein Modell der linienartigen oder flächenartigen Form ein Wasserzeichen einzuprägen, wobei das Modell eine Mehrzahl von Splines aufweist, die in ihrer Gesamtheit die Form bilden, wobei den Splines Kontrollpunkte (P) zugeordnet sind, sodass durch Veränderung der Lage der Kontrollpunkte und/oder von Gewichten der Kontrollpunkte (P) ein Verlauf des jeweils zugeordneten Splines verändert und damit kontrolliert werden kann, und wobei den Splines Knoten zugeordnet sind, die auf einem durch den jeweils zugeordneten Spline gebildeten Teil der Form liegen, und wobei die Anordnung eine Veränderungseinrichtung (2) aufweist, die ausgestaltet ist, beim Einprägen eines Wasserzeichens in das Modell die Form durch eine oder mehrere der folgenden Maßnahmen zu verändern:

   a) die Lage von zumindest einem Kontrollpunkt (P) wird verändert,
   b) ein Gewicht, mit dem ein Kontrollpunkt (P) auf die Form einwirkt und damit zumindest einen Bereich der Form beeinflusst, wird für zumindest einen Kontrollpunkt (P) verändert und/oder
   c) zumindest ein zusätzlicher Kontrollpunkt wird in das Modell eingefügt,

   **dadurch gekennzeichnet,**
   **dass** die Veränderungseinrichtung (2) ausgestaltet ist, eine Veränderungsinformation darüber, wie die Veränderung der Form rückgängig gemacht werden kann, durch Einfügen zumindest eines zusätzlichen Knotens in das Modell einzubringen.

**7.** Anordnung nach dem vorhergehenden Anspruch, mit einer Datenschnittstelle, die mit der Veränderungseinrichtung verbunden ist und über die Steuerungsinformation zur Steuerung der Veränderung zugeführt werden kann, insbesondere ein binärer Code und/oder ein Schlüssel, aus dem eine Vorschrift abgeleitet werden kann, wie die Veränderung und/oder die Veränderungsinformation zu kodieren ist.

**8.** Anordnung, mit einer Steuereinrichtung zur Steuerung der Produktion eines Gegenstandes, wobei die Steuereinrichtung ausgestaltet ist, das Modell mit den in Anspruch 1 genannten Merkmalen auszuwerten und Steuerbefehle zu erzeugen, die eine Produktionseinrichtung veranlassen einen entsprechend dem Modell geformten Gegenstand herzustellen, und wobei die Steuereinrichtung eine Extraktionseinrichtung aufweist, die derart ausgestaltet ist, dass die Veränderungsinformation automatisch anhand des oder der zusätzlichen Knoten ausgewertet wird und die Veränderung der Form rückgängig gemacht wird.

**Claims**

**1.** Method for producing industrial goods or other items, in particular motor vehicle bodies, in which in order to design a linear or planar shape of the item a watermark is embossed into a model of the linear or planar shape, the model having a plurality of splines that form the shape in their totality, the splines being assigned control points such that it is possible to vary, and thereby control, a profile of the respectively assigned spline by varying the position of the control points, and the splines being assigned nodes that lie on a part of the shape formed by the respectively assigned spline, and the shape being varied by one or more of the following measures during embossing of a watermark into the model:

a) the position of at least one control point is varied,
b) a weight with which a control point affects the shape and thus influences at least one area of the shape is varied for at least one control point, and/or
c) at least one additional control point is inserted into the model,

**characterized in that** an item of variation information relating to how the variation in the shape can be reversed is introduced by inserting at least one additional node into the model.

**2.** Method according to the preceding claim, in which there is prescribed a binary code with at least one bit that is intended to be coded by embossing the watermark into the model, the bit being able to assume a first value and a second value, and the bit being coded by a local displacement of the shape transverse to the profile of the shape by executing one or more of the measures a) to c) in Claim 1, such that the local displacement in a first direction codes the first value, and the local displacement in a second direction, opposite to the first direction, codes the second value.

**3.** Method according to one of the preceding claims, in which a logical assignment of a control point which, or whose weight, is used in executing one or more of the measures a) to c) to the additionally inserted node with the aid of which the variation information corresponding to the variation via the control point is introduced into the model is done by using a key.

**4.** Computer program having program code means in order to carry out a method in accordance with one of the preceding claims when the computer program is executed on a computer or computer network.

**5.** Data medium or computer system on which there is stored a data structure that executes the method according to one of the preceding claims after being loaded into a user and/or main memory of a computer or computer network.

**6.** Arrangement for producing industrial goods or other items, in particular motor vehicle bodies, in which the arrangement is configured in such a way that when designing a linear or planar shape of the item a watermark is embossed into a model of the linear or planar shape, the model having a plurality of splines that form the shape in their totality, the splines being assigned control points (P) such that it is possible to vary, and thereby control, a profile of the respectively assigned spline by varying the position of the control points and/or of weights of the control points (P), and the splines being assigned nodes that lie on a part of the shape formed by the respectively assigned spline, and the arrangement having a variation device (2) that is configured to vary the shape by one or more of the following measures during embossing of a watermark into the model:

    a) the position of at least one control point (P) is varied,
    b) a weight with which a control point (P) affects the shape and thus influences at least one area of the shape is varied for at least one control point (P), and/or
    c) at least one additional control point is inserted into the model,

**characterized in that** the variation device (2) is configured to introduce an item of variation information relating to how the variation in the shape can be reversed by inserting at least one additional node into the model.

7. Arrangement according to the preceding claim, having a data interface that is connected to the variation device and via which it is possible to feed control information for controlling the variation, in particular a binary code and/or a key from which a rule can be derived as to how the variation and/or the variation information is to be coded.

8. Arrangement having a control device for controlling the production of an item, in which the control device is configured to evaluate the model with the aid of the features named in Claim 1 and to generate control commands that prompt a production device to produce an item shaped in accordance with the model, and in which the control device has an extraction device configured in such a way that the variation information is evaluated automatically with the aid of the additional node/nodes and the variation in the shape is reversed.

**Revendications**

1. Procédé de fabrication de produits industriels ou autres objets, en particulier de carrosseries de véhicule, dans lequel pour la construction d'une forme linéaire ou surfacique de l'objet, un filigrane est estampé dans un modèle de la forme linéaire ou surfacique, le modèle présentant une pluralité de cannelures qui dans leur totalité forment la forme, aux cannelures étant associés des points de contrôle de sorte que par modification de la position des points de contrôle, un développement de la cannelure associée respectivement peut être modifié et ainsi contrôlé et aux cannelures étant associés des noeuds qui reposent sur une partie de la forme formée par la cannelure associée respectivement et lors de l'estampage d'un filigrane dans le modèle, la forme étant modifiée par une ou plusieurs des caractéristiques suivantes :

    a) la position d'au moins un point de contrôle est modifiée,
    b) un poids, avec lequel un point de contrôle agit sur la forme et influence ainsi au moins une zone de la forme, est modifié pour au moins un point de contrôle et/ ou
    c) au moins un point de contrôle supplémentaire est inséré dans le modèle,

**caractérisé en ce**
**qu'**une information de modification sur la manière dont la modification de la forme peut être annulée, est introduite par insertion d'au moins un noeud supplémentaire dans le modèle.

2. Procédé selon la revendication précédente, dans lequel un code binaire avec au moins un bit est prescrit, lequel doit être codé par l'estampage du filigrane dans le modèle, le bit pouvant adopter une première valeur et une seconde valeur et le bit étant codé par un déplacement local de la forme transversalement au développement de la forme en réalisant une ou plusieurs des mesures a) à c) de la revendication 1 de sorte que le déplacement local dans un premier sens code la première valeur et le déplacement local dans un second sens opposé au premier sens code la seconde valeur.

3. Procédé selon l'une quelconque des revendications précédentes, dans lequel une association logique d'un point de contrôle qui ou dont le poids est utilisé lors de la réalisation d'une ou de plusieurs des mesures a) à c), au noeud inséré en outre, avec lequel l'information de modification correspondant à la modification par le point de contrôle est introduite dans le modèle, est établie en utilisant une clé.

4. Programme informatique avec des moyens de code de programmation afin de mettre en oeuvre un procédé selon l'une quelconque des revendications précédentes, si le programme informatique est réalisé sur un ordinateur ou un réseau informatique.

5. Support de données ou système informatique, sur lequel est enregistrée une structure de données qui réalise après un chargement dans une mémoire de travail et/ou principale d'un ordinateur ou réseau informatique le procédé selon l'une quelconque des revendications précédentes.

6. Ensemble de fabrication de produits industriels ou autres objets, en particulier de carrosseries de véhicule automobile, dans lequel l'ensemble est configuré de sorte à estamper lors de la construction d'une forme linéaire ou surfacique de l'objet dans un modèle de la forme linéaire ou surfacique un filigrane, le modèle présentant une pluralité de cannelures qui forment dans leur totalité la forme, aux cannelures étant associés des points de contrôle (P) de sorte que par la modification de la position des points de contrôle et/ou des poids des points de contrôle (P), un développement de la cannelure associée respectivement puisse être modifié et ainsi contrôlé et aux cannelures étant associés des noeuds qui reposent sur une partie de la forme formée par la cannelure associée respectivement, et l'ensemble présentant un dispositif de modification (2) qui est configuré de sorte à modifier lors de l'estampage d'un filigrane dans le modèle la forme par une ou plusieurs des mesures suivantes :

    a) la position d'au moins un point de contrôle (P) est modifiée,
    b) un poids, avec lequel un point de contrôle (P) agit sur la forme et influence ainsi au moins une zone de la forme, est modifié pour au moins un point de contrôle (P) et/ ou
    c) au moins un point de contrôle supplémentaire est inséré dans le modèle,

**caractérisé en ce**
**que** le dispositif de modification (2) est configuré de sorte à introduire une information de modification sur la manière dont la modification de la forme peut être annulée, par insertion d'au moins un noeud supplémentaire dans le modèle.

7. Ensemble selon la revendication précédente, avec une interface de données qui est reliée au dispositif de modification et via laquelle une information de commande peut être amenée pour la commande de la modification, en particulier un code binaire et/ou une clé, de laquelle une prescription peut être dérivée, doit être codée comme la modification et/ou l'information de modification.

8. Ensemble avec un dispositif de commande pour la commande de la production d'un objet, dans lequel le dispositif de commande est configuré de sorte à évaluer le modèle avec les caractéristiques citées dans la revendication 1 et à générer des ordres de commande qui amènent un dispositif de production à fabriquer un objet formé selon le modèle et le dispositif de commande présentant un dispositif d'extraction qui est configuré de telle sorte que l'information de modification soit évaluée automatiquement au moyen du ou des noeuds supplémentaires et la modification de la forme soit annulée.

Fig. 1

u=2

u=1

u=0

Fig. 2

Fig. 3

EP 1 994 499 B1

$P_{mod}$

S

P

$C_{mod}$

C

u=0.8737

u=0

u=1

u=1

Fig. 4

u=1.2892

u=1.578

u=2

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- *Computer Aided Design,* 1989, vol. 21 (8), 509-518
- **Wayne Tiller.** The Nurbs Book. Springer Verlag, Januar 1997
- Robust Mesh Watermarking. **Praun E. ; Hoppe H. ; Finkelstein A.** Proceedings of the Conference on Computer Graphics. ACM Press, 49-56
- **Hartley R. ; Zisserman A.** Multiple View Geometry. Cambridge University Press, 2003